# EUROPEAN PATENT APPLICATION

(11) **EP 4 793 875 A1**
(43) Date of publication of application: **19.08.2026**
(21) Application number: 24861339.0
(22) Date of filing: 17.10.2024
(51) Int. Cl.: G06T 3/02, H04N 1/387

(54) **ORTHO-IMAGE GENERATION DEVICE, ORTHO-IMAGE GENERATION METHOD, AND PROGRAM**

(71) Applicant: CalTa Inc., Minato-ku Tokyo 108-0074 (JP)
(72) Inventor: TAKAMIZAWA Takuya, Tokyo 108-0074 (JP); TAKATSU Toru, Tokyo 108-0074 (JP)
(74) Representative: Hasegawa, Kan
(86) International application number: PCT/JP2024/036932
(87) International publication number: WO 2026/083534

(57) **Abstract**

[Problem to be Solved] An orthoimage generation apparatus, an orthoimage generation method, and a program capable of efficiently generating an orthoimage are provided.

[Solution] The orthoimage generation apparatus according to the present disclosure includes a storage unit configured to store three-dimensional model data generated based on data of a plurality of captured images of an object in the real world; and a control unit configured to perform: a reception process of displaying the three-dimensional model data on a display unit used by a user and receiving designated information including a designated range and a designated direction desired to be orthorectified in the three-dimensional model data from the user, an orthoimage generation process of generating an orthoimage of the designated range and the designated direction included in the designated information by performing an orthographic projection transformation of the three-dimensional model data of an area corresponding to the designated range and the designated direction, and an output process of displaying the generated orthoimage on the display unit.

## Description

### [FIELD OF THE INVENTION]

The present disclosure relates to an orthoimage generation apparatus, an orthoimage generation method, and a program.

### [BACKGROUND ART]

Conventionally, a technique for generating an orthographic orthoimage by performing orthographic correction of a captured image data of perspective projection (central projection) is known (see Patent Literature 1). Thereby, for example, an orthographic image of an object viewed directly above can be generated.

### [PRIOR ART LITERATURE]

### [PATENT LITERATURE]

Patent Literature 1: Japanese Patent Application Publication No. 2024-073601

### [SUMMARY OF THE INVENTION]

### [TECHNICAL PROBLEM]

However, in case of generating an orthoimage viewed from a plurality of directions of a three-dimensional object, it is necessary to select data of a plurality of images including a target face and adjust scale of data of the image, which results in the problem of taking time for generation process of the orthoimage.

Therefore, the present disclosure has been made in view of the above problem, and the purpose is to provide an orthoimage generation apparatus, an orthoimage generation method, and a program capable of efficiently generating the orthoimage.

### [TECHNICAL SOLUTION]

According to the present disclosure, an orthoimage generation apparatus is provided, wherein the apparatus comprises: a storage unit configured to store three-dimensional model data generated based on data of a plurality of captured images of an object in the real world; and a control unit configured to perform: a reception process of displaying the three-dimensional model data on a display unit used by a user and receiving designated information including a designated range and a designated direction desired to be orthorectified in the three-dimensional model data from the user, an orthoimage generation process of generating an orthoimage of the designated range and the designated direction included in the designated information by performing an orthographic projection transformation of the three-dimensional model data of an area corresponding to the designated range and the designated direction, and an output process of displaying the generated orthoimage on the display unit.

Further, according to the present disclosure, an orthoimage generation method is provided, wherein a control unit performs: causing a storage unit to store three-dimensional model data generated based on data of a plurality of captured images of an object in the real world; a reception process of displaying the three-dimensional model data on a display unit used by a user and receiving designated information including a designated range and a designated direction desired to be orthorectified in the three-dimensional model data from the user; an orthoimage generation process of generating an orthoimage of the designated range and the designated direction included in the designated information by performing an orthographic projection transformation of the three-dimensional model data of an area corresponding to the designated range and the designated direction; and an output process of displaying the generated orthoimage on the display unit.

Further, according to the present disclosure, a program is provided for causing a control unit to execute: a process of storing three-dimensional model data generated based on data of a plurality of captured images of an object in the real world; a reception process of displaying the three-dimensional model data on a display unit used by a user and receiving designated information including a designated range and a designated direction desired to be orthorectified in the three-dimensional model data from the user; an orthoimage generation process of generating an orthoimage of the designated range and the designated direction included in the designated information by performing an orthographic projection transformation of the three-dimensional model data of an area corresponding to the designated range and the designated direction; and an output process of displaying the generated orthoimage on the display unit.

### [ADVANTAGEOUS EFFECT]

According to the present disclosure, an orthoimage generation apparatus, an orthoimage generation method, and a program capable of efficiently generating an orthoimage can be provided.

### [BRIEF DESCRIPTION OF THE DRAWINGS]

FIG. 1 is a figure showing a configuration example of an orthoimage generation system according to one embodiment of the present disclosure.
FIG. 2 is a figure showing a configuration example of a computer implementing the information processing apparatus according to the embodiment.
FIG. 3 is a figure showing a configuration example of a user terminal according to the embodiment.
FIG. 4 is a flowchart diagram related to a series of controls according to the embodiment.
FIG. 5 is a figure showing a display example of a screen of a user terminal according to the embodiment.
FIG. 6 is a figure showing another example of the screen of the user terminal according to the embodiment.

### [DESCRIPTION OF THE EMBODIMENT]

Referring to the accompanying drawings below, preferred embodiments of the present disclosure will be described in detail. Note that, in the present specification and the drawings, components having substantially the same functional configuration are denoted by the same reference numerals to avoid duplicate explanation.

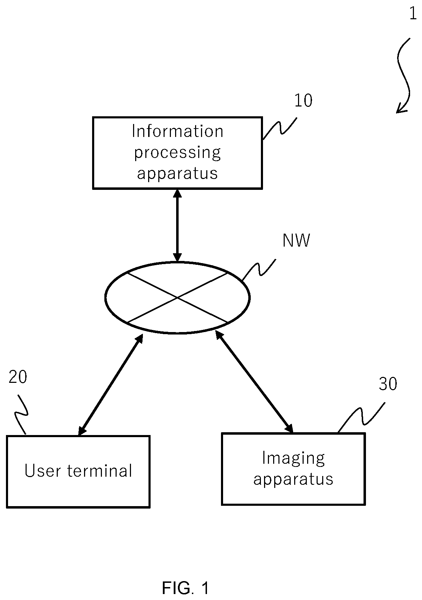

FIG. 1 shows an overview of a system of the present embodiment. The orthoimage generation system 1 of the present embodiment includes an information processing apparatus 10 and a user terminal 20. The information processing apparatus 10 and the user terminal 20 can be connected and communicated via a network NW. The information processing apparatus corresponds to an example of an "orthoimage generation apparatus".

The network is composed of the Internet, intranet, wireless LAN (Local Area Network), WAN (Wide Area Network), fixed telephone line, mobile phone line, or a combination thereof. Note that the user terminal 20 constituting the system 1 may be only one, or may be two or more. In this example, the information processing apparatus 10 can communicate with an imaging apparatus 30, but the imaging apparatus 30 is not an essential component.

Although in the present embodiment users communicate with the information processing apparatus 10 via their respective user terminals 20, this is not limiting, and each user may use the system via an input unit and an output unit of the information processing apparatus 10. That is, the system 1 can function with the information processing apparatus 10 alone without including the user terminal and the network. Alternatively, by implementing all the functions of the information processing apparatus 10 on the user terminal, the user terminal can function alone.

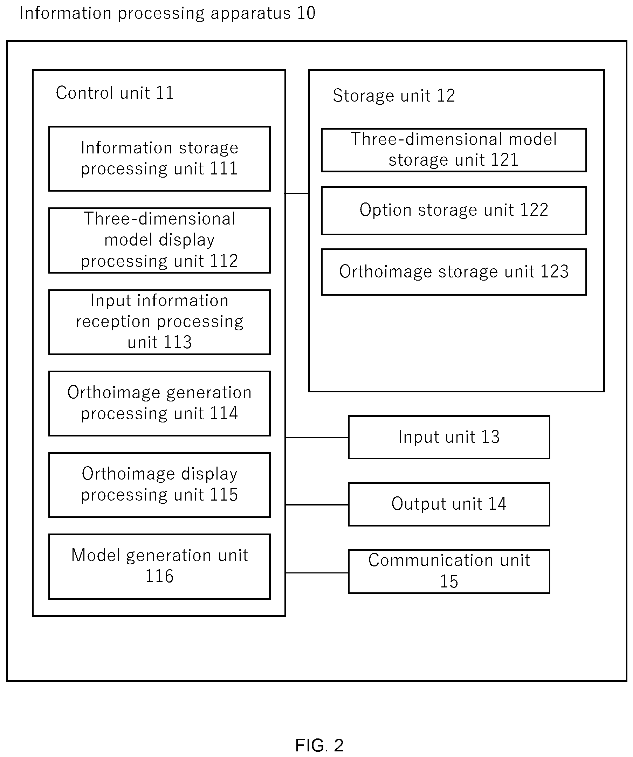

FIG. 2 is a block diagram showing a functional configuration of the information processing apparatus 10. The information processing apparatus 10 is an apparatus used by a system administrator etc. when operating and managing various services, and may be, for example, a general-purpose computer such as a workstation or a personal computer, or may be logically implemented by cloud computing technology.

The information processing apparatus 10 of the present embodiment includes a control unit 11, a storage unit 12, an input unit 13, an output unit 14, and a communication unit 15. The information processing apparatus 10 receives various input information from the input unit 13 or from an external device (such as the user terminal 20) via the communication unit 15. The control unit 11 can execute processing according to a program corresponding to the input information, and cause the output unit 14 to output the processing result of the program (for example, an image, an audio, etc.) from the output unit 14, or transmit it to the external device such as the user terminal 20 via the communication unit 15 to cause to output it. Note that a part of the program may be transmitted to another information processing apparatus (for example, the user terminal, another server, etc.) and executed on another information processing apparatus. In this case, the other information processing apparatus can be, for example, a smartphone, a mobile phone terminal, a tablet terminal, a personal computer, and the like, and is connected wirelessly or by wire to the information processing apparatus 10 via a network such as the Internet.

The control unit 11 passes information between each unit and controls the entire information processing apparatus 10, and is implemented by executing programs stored in predetermined memory by, for example, CPU (Central Processing Unit), MPU (Micro Processing Unit), or GPU (Graphics Processing Unit).

The control unit 11 includes: an information storage processing unit 111 that performs processes such as storing and updating (including change and deletion) various information; a three-dimensional model display processing unit 112 that causes a display unit of the user terminal etc. to display a three-dimensional model; an input information reception processing unit 113 that receives input information from the user terminal; an orthoimage generation processing unit 114 that generates an orthoimage; and an orthoimage display processing unit 115 that cause the display unit of the user terminal etc. to display the orthoimage. The control unit 11 may also include a model generation unit 116 that generates three-dimensional model data based on data of captured images.

The model generation unit 116 generates a three-dimensional model by executing, for example, SfM (Structure from Motion) processing. SfM processing refers to the process of generating a three-dimensional model by using the principle of triangulation based on a plurality of two-dimensional images generated by imaging an object having a plurality of feature points from a plurality of imaging positions. SfM processing preferably includes a process such as bundle adjustment that minimizes reprojection error. Note that the three-dimensional model may be data generated without SfM processing, and may include three-dimensional data generated by any analysis of local situation such as using data of CG data and BIM model etc.

The model generation unit 116 obtains a plurality of two-dimensional images including an image of the object to be imaged from still image data set or a frame constituting moving image data. Next, the model generation unit 116 extracts the feature points of the object to be imaged from each two-dimensional image and associates the feature points between the two-dimensional images (feature point matching). Next, the model generation unit 116 estimates the imaging position 30 (camera position) and posture (orientation) of the camera when each two-dimensional image is generated based on the associated feature point, and calculates three-dimensional coordinate of the three-dimensional point corresponding to the feature point based on the estimation result. The model generation unit 116 calculates three-dimensional coordinates of a plurality of three-dimensional points corresponding to a plurality of feature points. The three-dimensional coordinates in this case indicate the coordinates in a three-dimensional coordinate system set in virtual space. The three-dimensional coordinate system is defined by the X-axis, Y-axis, and Z-axis perpendicular to each other. The three-dimensional coordinate system CS may be a coordinate system having a predetermined position of virtual space VS as the origin, or a coordinate system to which geospatial coordinates (ground coordinates) or actual size information is assigned. In this way, the model generation unit 116 generates point cloud data composed of a plurality of three-dimensional points. The model generation unit 116 may add one or more pieces of information among color information, luminance information, normal vector information, and reflection intensity information to each point constituting the point cloud.

Further, the model generation unit 116 may execute MVS (Multi View Stereo) processing in addition to SfM processing. The model generation unit 116 can generate point cloud data indicating a dense point cloud by executing MVS processing. In this case, a three-dimensional model is constructed by the dense point cloud. The model generation unit 116 preferably assigns a face to the three-dimensional model based on the point cloud data. The process of assigning the face is, for an example, a process of converting point cloud data constituting the three-dimensional model into mesh data. In this case, for example, the model generation unit 116 generates faces (for example, a polygon) of a plurality of polygons (for example, a triangle) generated by connecting the points of the point cloud data constituting the three-dimensional model and represents the three-dimensional model with the faces of the plurality of polygons. In this case, for example, the model generation unit 116 generates TIN (Triangulated Irregular Network) data based on the point cloud data, and represents the three-dimensional model by TIN data. As a result, the three-dimensional model is represented by a set of triangular faces. The process of assigning the face to the three-dimensional model is not particularly limited, and may be the following process. For example, the model generation unit 116 assigns a face to each point constituting the point cloud data. The face in this case is, for example, a circular face centered on each point constituting the point cloud data. Alternatively, for example, the model generation unit 116 assigns a face to the three-dimensional model composed of point cloud data by executing an octree algorithm. In this case, specifically, the model generation unit 116 recursively divides the three-dimensional model into eight cubes (octants) to represent the three-dimensional model by a plurality of cubes. Alternatively, for example, the model generation unit 116 assigns a face to the three-dimensional model by converting the point cloud data into surface data.

Further, the model generation unit 116 may add material information based on the two-dimensional image to the face assigned to the three-dimensional model. Material information is information including color and pattern of the object to be imaged. For example, the model generation unit 116 may perform a process of mapping a texture for each face (for example, each polygon) constituting the mesh data of the three-dimensional model. The mesh data in this case is, for example, TIN data.

The storage unit 12 stores various information. The storage unit 12 stores a program for executing various control processes and each function in the control unit 11, input information, and the like, and is configured by one or any combination of RAM (Random Access Memory), ROM (Read Only Memory), flash memory, HDD (Hard Disk Drive), SSD (Solid State Drive), and other storage etc.

The storage unit 12 includes, for example, a three-dimensional model storage unit 121, an option storage unit 122, and an orthoimage storage unit 123. The three-dimensional model storage unit 121 stores various information related to the three-dimensional model data. The three-dimensional model data is generated based on data of a plurality of captured images of the object in the real-world. For example, the control unit of the information processing apparatus generates the three-dimensional model of the object to be imaged based on a plurality of two-dimensional images generated by imaging the object to be imaged (target area, target object) from a plurality of different imaging positions. The three-dimensional model is placed in a virtual space (virtual three-dimensional space). The data of the captured image may be, for example, an image captured by the imaging apparatus 30 and transmitted to the information processing apparatus.

The input unit 13 is for a user to input various information as described above, and is implemented by, for example, a keyboard, a mouse, a touch panel, a microphone, etc.

The output unit 14 can output information generated by the control unit 11 or information received via the communication unit. The output unit 14 can include, for example, an image output unit (display unit) such as a liquid crystal display (LCD) and a touch panel, and an audio output unit such as a speaker. Various information can be output based on an instruction from the control unit 11. Alternatively, the output unit 14 may output (transmit) various information to another information processing apparatus (user terminal) or the like via the communication unit 15.

The communication unit 15 is for communicating with another information processing apparatus, and has a function as a receiving unit for receiving various data and signals transmitted from other information processing apparatus and the like, and a function as transmitting unit for transmitting various data and signals to other information processing apparatus according to the instruction of the control unit 11.

The user terminal 20 is used by a user who browses a site using the service provided by the system 1. The user terminal 20 can be, for example, an information processing apparatus such as a personal computer, a tablet terminal, a smartphone, a mobile phone, and the like.

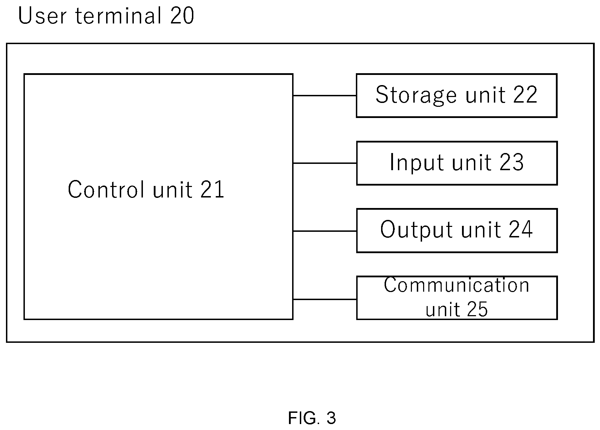

FIG. 3 is a functional block diagram showing the user terminal 20 of FIG. 1. The user terminal 20 includes a control unit 21, a storage unit 22, an input unit 23, an output unit 24, and a communication unit 25.

The control unit 21, similar to the control unit 11 described above, performs information transfer between the units and controls the entire user terminal 20, and can be implemented by, for example, CPU, MPU, or GPU executing a program stored in a predetermined memory.

The storage unit 22, similar to the storage unit 12 described above, stores a program for executing various control processing and each function in the control unit 21, input information, etc. and can be constructed from one or any combination of RAM, ROM, flash memory, HDD, SSD, or other storage etc.

The input unit 23, similar to the input unit 13 described above, is for the user to input various information as described above, and is implemented by, for example, a touch panel, a keyboard, a mouse, a microphone, etc.

The output unit 24, similar to the output unit 14 described above, can output information generated by the control unit 21 or information received via the communication unit, and can include, for example, an image output unit (display unit) such as a liquid crystal display or a touch panel, and audio output units such as speakers.

The communication unit 25, similar to the communication unit 15 described above, is for communicating with another information processing apparatus, and has a function as a receiving unit for receiving various data and signals transmitted from other information processing apparatus or the like, and a function as a transmitting unit for transmitting various data and signals to other information processing apparatus etc. according to an instruction of the control unit 21. The user inputs various information via the input unit 23 of the user terminal 20 used by each user, and the input information is transmitted to the information processing apparatus 10 as a server apparatus via the communication unit 25. Further, the communication unit 25 receives the processing result output from the information processing apparatus 10, which is confirmed via the output unit 24.

The imaging apparatus 30 may be an apparatus capable of generating image data such as a still image or a video by imaging and transmitting it to an information processing apparatus. The imaging apparatus 30 may be, for example, a portable terminal such as a digital camera, a smartphone, or a tablet terminal, or a moving apparatus such as an unmanned mobile apparatus or a manned mobile apparatus. The unmanned mobile apparatus is, for example, an unmanned aerial aircraft (unmanned aerial vehicle) such as a drone, an unmanned ground vehicle, an unmanned underwater vehicle, or an unmanned surface boat. The unmanned ground vehicle is, for example, an unmanned ground car or an unmanned ground vehicle imitating a living organism (for example, a snake-type unmanned ground vehicle). The manned mobile apparatus are, for example, an aircraft, automobile, ship, or submarine.

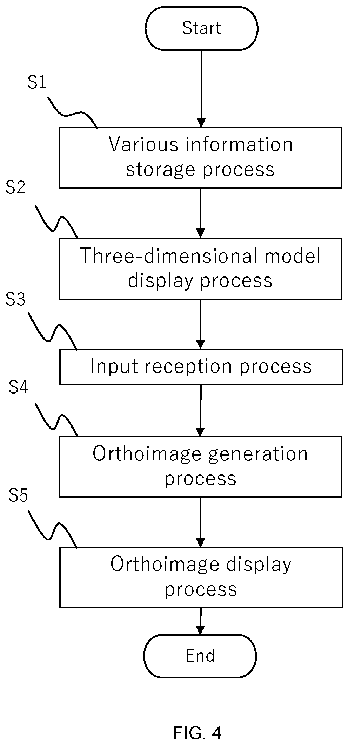

FIG. 4 is a flow diagram illustrating an example of an information processing method executed in the present system. The information processing method includes an information storage process (S1) executed by the control unit 11, a three-dimensional model display process (S2), an input reception process (S3), an orthoimage generation process (S4), and an orthoimage display process (S5).

The information storage processing unit 111 of the control unit 11 stores three-dimensional model data generated based on data of a plurality of captured images of the object in the real world (S1). The three-dimensional model data may be data generated by the model generation unit 116, or may be data obtained from an external device etc.

The information storage processing unit 111 stores information of options in a designated range and a designated direction. The options of the designated range and the designated direction are stored in association with a predetermined surface, such as the upper face, lower face, side face, outer face, inner face, etc. of the three-dimensional model. The options of the designated range and the designated direction may be set by a system administrator, or the control unit may detect the faces constituting the three-dimensional model and automatically assign a selection option corresponding to each face. The designated direction is indicated in the direction perpendicular to a face constituting the designated range. The designated direction may include two directions such as a front side and a back side and be selected any one of the two, or may be only one direction such as only the front side or only the back side.

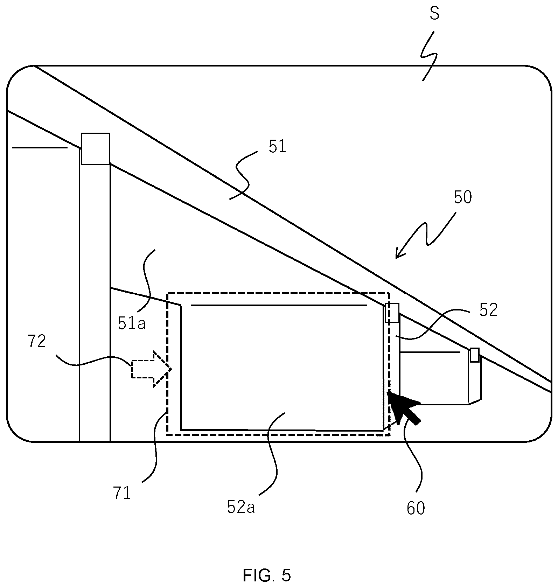

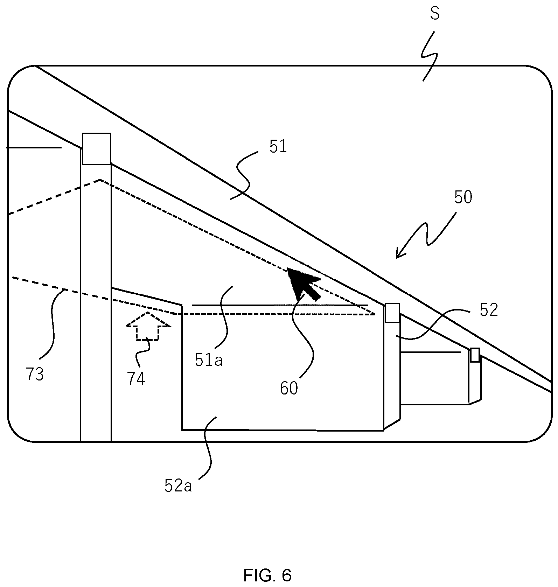

The three-dimensional model display processing unit 112 of the control unit 11 causes the display unit such as the user terminal etc. to display a three-dimensional model (S2). For example, in the examples of FIGS. 5 and 6, the three-dimensional model display processing unit 112 causes to display a three-dimensional model of an overpass 50. In the screen, the three-dimensional model (or viewpoint) can be rotated in the virtual space according to a user's operation (arbitrary operation such as mouse movement with clicking, dragging operation, etc.), and the three-dimensional model viewed from an arbitrary direction, an image of the option etc. can be displayed. Further, as with a known three-dimensional model display apparatus, enlargement and reduction etc. may be possible according to the user operation.

In the examples of FIGS. 5 and 6, the three-dimensional model display processing unit 112 causes a screen S of the display unit to display the three-dimensional model of the overpass 50 including a bridge girder 51 and a bridge pier 52 and a cursor 60 that moves in response to touch panel operation or mouse operation of the user etc. When the cursor 60 moves near the bridge pier 52 in response to the operation of the user, a frame 71 indicating the option of the designated range is displayed. That is, the three-dimensional model display processing unit 112 detects a position of the cursor 60 and causes to display an option associated with the position. In case where no option associated with the position is stored in the storage unit, the option is not displayed.

Further, when the cursor 60 moves in response to the operation of the user, options not associated with the position of the cursor 60 are hidden, and as shown in FIG. 6, another option (frame 73, arrow 74) associated with the position of the cursor 60 can be displayed. The frame 71 in FIG. 5 is associated with the side face (inner face) 52a of the bridge pier 52, and when the cursor 60 is moved near the side face 52a, the frame 71 is displayed. The frame 71 is displayed separated from the associated face 52a by a predetermined interval, but may not be limited thereto, and may be displayed at the same position as the face. In the example of FIG. 6, the frame 73 and the arrow 74 corresponding to the lower face 51a are displayed when the cursor 60 is located near the lower face 51a of the bridge girder 51a. The frames 71, 73 are displayed as rectangular frames, but are not limited to this and can be set to any shape. The shapes of the frames 71, 73 are preferably shapes corresponding to a target face (the side face 52a in the example of FIG. 5). Further, the sizes of the frames 71, 73 are preferably sizes corresponding to the target face. The corresponding shape includes, for example, the same shape or a similar shape. The corresponding size includes, for example, the same size, a similar size (a range that is larger or smaller by a predetermined value or a predetermined ratio with respect to the area of the target face, or the like). In the example of FIG. 5, an arrow 72 indicating the option in the designated direction is displayed, and in the example of FIG. 6, the arrow 74 is displayed. In each of the illustrated examples, only one of the frames 71, 73 and only one of the arrows 72, 74 are shown, but options of a plurality of designated ranges and directions are simultaneously displayed in response to the position of the cursor, and either one may be selected.

The input information reception processing unit 113 of the control unit 11 receives input information from the user terminal etc. (S3). The unit receives selection of the option or a designated input of a designated face by, for example, touching or a long touch with the touch panel, a mouse click etc. The selection of the option may be one in which the displayed designated range and the designated direction are simultaneously selected, or the designated direction may be selected after the designated range is selected. The input information reception processing unit 113 can receive, for example, designation of the frame 71 in FIG. 5 or the frame 73 in FIG. 6. Alternatively, a plurality of designated ranges may be simultaneously selected. For example, the frame 71 in FIG. 5 and the frame 73 in FIG. 6 may be designated in sequence or at the same time. Further, the control unit may not cause to display the option, in which case, for example, the user may directly select the side face 52a of the bridge pier 52 or the lower face 51a of the bridge girder 51 by a selection operation such as a touch or click.

The orthoimage generation processing unit 114 of the control unit 11 executes an orthoimage generation process (S4) of generating an orthoimage of a face (for example, at least one of both the side face 52a of the bridge pier 52 and the lower face 51a of the bridge girder 51a etc.) corresponding to the option designated in the designated input (S4). The orthoimage generation processing unit 114 can generate an orthoimage of the designated range and the designated direction included in the designated information by performing orthographic projection transformation of the designated face of the three-dimensional model data. The method of orthorectification may be other known methods.

The orthoimage display processing unit 115 of the control unit 11 causes the display unit such as the user terminal to display the orthoimage (S5). When the orthoimage display processing unit 115 receives input information via the input unit of the information processing apparatus, and the unit 115 can cause the display unit of the information processing apparatus to display the orthoimage. That is, it is preferable to display the orthoimage on a display unit of a terminal apparatus into which the input information is input. In this way, according to the present embodiment, the user can select a desired face and confirm the orthoimage while looking at the three-dimensional model displayed on the screen. The user can inspect crack, peeling, distortion, etc. of the target face from the orthoimage.

As described above, the information processing apparatus of the present embodiment includes the storage unit configured to store the three-dimensional model data generated based on the data of the plurality of captured images of the object in the real world; and the control unit configured to perform: the reception process of displaying the three-dimensional model data on the display unit used by the user and receiving the designated information including the designated range and the designated direction desired to be orthorectified in the three-dimensional model data from the user, the orthoimage generation process of generating the orthoimage of the designated range and the designated direction included in the designated information by performing the orthographic projection transformation of the three-dimensional model data of the area corresponding to the designated range and the designated direction, and the output process of displaying the generated orthoimage on the display unit. With such a configuration, an orthoimage can be generated more efficiently than the conventional orthoimage generation method (when a plurality of two-dimensional images including the object are sorted, scaled, and orthorectified).

In the present embodiment, the storage unit may store the options of the designated range and designated direction respectively associated with a plurality of locations in the three-dimensional model data, and the control unit may cause the display unit to display, in response to an input operation of the user, the options of the designated range and the designated direction associated with the position designated in response to the input operation of the user while the three-dimensional model data displayed on the display unit, and may generate the orthoimage corresponding to the designated range and the designated direction of one or more options selected by the user. With such a configuration, the user only needs to designate a pre-prepared range and direction, so that an orthoimage can be generated more efficiently.

In the present embodiment, the three-dimensional model data may be generated by performing a process of pasting two-dimensional image data on three-dimensional point cloud data obtained by SFM processing of the data of the plurality of captured images.

In the present embodiment, the option of the designated range may be displayed in a rectangular frame or face. According to this, the designated range can be easily understood visually. Note that the shape of the option of the designated range is not limited to a rectangle, and may be round or oval, or a shape according to the outline of the three-dimensional model. Further, the face to become the option of the designated range may be a flat face or a curved face, any face (upper face, lower face, side face, etc.) itself of the three-dimensional model data, or a face displayed at a predetermined interval from its face.

In the present embodiment, the option of the designated direction may be displayed by an arrow. According to this, the designated direction can be easily understood visually.

In the present embodiment, the options of the designated range and the designated direction may include an inner face viewed from inside of the three-dimensional model data. The inner face is a face of a structure as the object viewed from the inside, including the inner face and a ceiling face of a tunnel or bridge pier, etc. According to this, it is possible to generate an orthoimage not only of the outer face but also of the inner face of the three-dimensional model.

In the present embodiment, the options of the designated range and the designated direction may include a lower face viewed from the lower side of the three-dimensional model data. According to this, it is possible to generate an orthoimage not only of the upper face but also of the lower face of the three-dimensional model. Note that the options of the designated range and the designated direction may include the upper face and the outer face of the three-dimensional model.

As described above, a preferred embodiment of the present disclosure has been described in detail with reference to the accompanying drawings, but the technical scope of the present disclosure is not limited to such examples. It is clear that a person with ordinary skill in the technical field of the present disclosure can conceive of various changes or modifications within the scope of the technical ideas described in the claims, and these are naturally understood to belong to the technical scope of the present disclosure.

The apparatus described in the present specification may be realized as a single apparatus, or may be realized by a plurality of apparatuses (for example, cloud servers) or the like partially or wholly connected by the network. For example, the control unit and the storage unit of the information processing apparatus may be realized by different servers connected to each other by the network.

The series of processes according to the apparatus described in the present specification may be implemented using either software, hardware, or a combination of software and hardware. It is possible to create a computer program for realizing each function of the information processing apparatus according to the present embodiment and implement it on a PC etc. A computer-readable recording medium containing such a computer program can also be provided. The recording medium is, for example, a magnetic disk, an optical disk, a magneto-optical disk, a flash memory, etc. Further, the computer program may be distributed via the network, for example, without using the recording medium.

Further, the processes described in the present specification with reference to the flowchart diagram may not necessarily be performed in the order shown. Some processing steps may be executed in parallel. Further, additional processing steps may be employed, and a part of processing steps may be omitted.

Further, the effects described in the present specification are only explanatory or exemplary and are not limiting. That is, the technique according to the present disclosure may perform other effects that are apparent to those skilled in the art from the description in the present specification in conjunction with or in place of the above effects.

The following configurations also belong to the technical scope of the present disclosure.
(Item 1) An orthoimage generation apparatus comprising:
   a storage unit configured to store three-dimensional model data generated based on data of a plurality of captured images of an object in the real world; and
   a control unit configured to perform:
      a reception process of displaying the three-dimensional model data on a display unit used by a user and receiving designated information including a designated range and a designated direction desired to be orthorectified in the three-dimensional model data from the user,
      an orthoimage generation process of generating an orthoimage of the designated range and the designated direction included in the designated information by performing an orthographic projection transformation of the three-dimensional model data of an area corresponding to the designated range and the designated direction, and
      an output process of displaying the generated orthoimage on the display unit.
(Item 2) The apparatus according to item 1, wherein the storage unit stores options of the designated range and designated direction respectively associated with a plurality of locations in the three-dimensional model data, and
   the control unit causes the display unit to display, in response to an input operation of the user, the options of the designated range and the designated direction associated with the position designated in response to the input operation of the user while the three-dimensional model data is displayed on the display unit, and
   generates the orthoimage corresponding to the designated range and the designated direction of one or more options selected by the user.
(Item 3) The orthoimage generation apparatus according to item 1 or 2, wherein the three-dimensional model data is generated by performing a process of pasting two-dimensional image data on three-dimensional point cloud data obtained by SFM processing of the data of the plurality of captured images.
(Item 4) The orthoimage generation apparatus according to item 1 or 2, wherein the option of the designated range is displayed in a rectangular frame or face.
(Item 5) The orthoimage generation apparatus according to item 1 or 2, wherein the option of the designated direction is displayed by an arrow.
(Item 6) The orthoimage generation apparatus according to item 1 or 2, wherein the options of the designated range and the designated direction include an inner face viewed from the inside of the three-dimensional model data.
(Item 7) The orthoimage generation apparatus according to item 1 or 2, wherein the options of the designated range and the designated direction include a lower face viewed from the lower side of the three-dimensional model data.
(Item 8) An orthoimage generation method, wherein a control unit performs:
   causing a storage unit to store three-dimensional model data generated based on data of a plurality of captured images of an object in the real world;
   a reception process of displaying the three-dimensional model data on a display unit used by a user and receiving designated information including a designated range and a designated direction desired to be orthorectified in the three-dimensional model data from the user;
   an orthoimage generation process of generating an orthoimage of the designated range and the designated direction included in the designated information by performing an orthographic projection transformation of the three-dimensional model data of an area corresponding to the designated range and the designated direction; and
   an output process of displaying the generated orthoimage on the display unit.
(Item 9) A program for causing a control unit to execute:
   a process of storing three-dimensional model data generated based on data of a plurality of captured images of an object in the real world;
   a reception process of displaying the three-dimensional model data on a display unit used by a user and receiving designated information including a designated range and a designated direction desired to be orthorectified in the three-dimensional model data from the user;
   an orthoimage generation process of generating an orthoimage of the designated range and the designated direction included in the designated information by performing an orthographic projection transformation of the three-dimensional model data of an area corresponding to the designated range and the designated direction; and
   an output process of displaying the generated orthoimage on the display unit.

### [REFERENCE SIGNS LIST]

1 Orthoimage generation system
10 Information processing apparatus
20 User terminal
111 Information storage processing unit
112 Three-dimensional model display processing unit
113 Input information reception processing unit
114 Orthoimage generation processing unit
115 Orthoimage display processing unit
116 Model generation unit

## Claims

1. An orthoimage generation apparatus comprising:
a storage unit configured to store three-dimensional model data generated based on data of a plurality of captured images of an object in the real world; and
a control unit configured to perform:
a reception process of displaying the three-dimensional model data on a display unit used by a user and receiving designated information including a designated range and a designated direction desired to be orthorectified in the three-dimensional model data from the user,
an orthoimage generation process of generating an orthoimage of the designated range and the designated direction included in the designated information by performing an orthographic projection transformation of the three-dimensional model data of an area corresponding to the designated range and the designated direction, and
an output process of displaying the generated orthoimage on the display unit.

2. The orthoimage generation apparatus according to claim 1, wherein the storage unit stores options of the designated range and designated direction respectively associated with a plurality of locations in the three-dimensional model data, and
the control unit causes the display unit to display, in response to an input operation of the user, the options of the designated range and the designated direction associated with the position designated in response to the input operation of the user while the three-dimensional model data is displayed on the display unit, and
generates the orthoimage corresponding to the designated range and the designated direction of one or more options selected by the user.

3. The orthoimage generation apparatus according to claim 1 or 2, wherein the three-dimensional model data is generated by performing a process of pasting two-dimensional image data on three-dimensional point cloud data obtained by SFM processing of the data of the plurality of captured images.

4. The orthoimage generation apparatus according to claim 1 or 2, wherein the option of the designated range is displayed in a rectangular frame or face.

5. The orthoimage generation apparatus according to claim 1 or 2, wherein the option of the designated direction is displayed by an arrow.

6. The orthoimage generation apparatus according to claim 1 or 2, wherein the options of the designated range and the designated direction include an inner face viewed from the inside of the three-dimensional model data.

7. The orthoimage generation apparatus according to claim 1 or 2, wherein the options of the designated range and the designated direction include a lower face viewed from the lower side of the three-dimensional model data.

8. An orthoimage generation method, wherein a control unit performs:
causing a storage unit to store three-dimensional model data generated based on data of a plurality of captured images of an object in the real world;
a reception process of displaying the three-dimensional model data on a display unit used by a user and receiving designated information including a designated range and a designated direction desired to be orthorectified in the three-dimensional model data from the user;
an orthoimage generation process of generating an orthoimage of the designated range and the designated direction included in the designated information by performing an orthographic projection transformation of the three-dimensional model data of an area corresponding to the designated range and the designated direction; and
an output process of displaying the generated orthoimage on the display unit.

9. A program for causing a control unit to execute:
a process of storing three-dimensional model data generated based on data of a plurality of captured images of an object in the real world;
a reception process of displaying the three-dimensional model data on a display unit used by a user and receiving designated information including a designated range and a designated direction desired to be orthorectified in the three-dimensional model data from the user;
an orthoimage generation process of generating an orthoimage of the designated range and the designated direction included in the designated information by performing an orthographic projection transformation of the three-dimensional model data of an area corresponding to the designated range and the designated direction; and
an output process of displaying the generated orthoimage on the display unit.
